# EUROPÄISCHE PATENTSCHRIFT

(11) **EP 1 657 222 B1**
(45) Veröffentlichungstag und Bekanntmachung des Hinweises auf die Patenterteilung: **11.03.2009**
(21) Anmeldenummer: 05024303.9
(22) Anmeldetag: 08.11.2005
(51) Int. Cl.: C02F 3/22, C02F 3/28

(54) **Verfahren und Vorrichtung zur biologischen Behandlung einer Suspension in einem Bioreaktor**
Method and apparatus for biological treatment of a suspension in a bioreactor.
Méthode et dispositif de traitement biologique d'une suspension dans un bioréacteur.

(30) Priorität: 12.11.2004 DE 102004054673
(43) Veröffentlichungstag der Anmeldung: 17.05.2006
(73) Patentinhaber: STRABAG Umweltanlagen GmbH, 01067 Dresden (DE)
(72) Erfinder: Langhans, Gerhard, Dr., 01159 Dresden (DE)

(56) Entgegenhaltungen:
- US-A- 4 954 257
- US-A- 5 565 098
- US-A- 5 942 116
- BISHOF WOLFGANG: 'Abwassertechnik', 1998, TEUBNER, STUTTGART, ISBN 3-519-15247-9 * Seite 582 - Seite 589 *

## Beschreibung

Die Erfindung betrifft ein Verfahren zur biologischen Behandlung einer Suspension in einem Bioreaktor, wobei zumindest ein Teil der behandelten Suspension aus dem Bioreaktor abgeführt wird, sowie eine Vorrichtung zur Durchführung des Verfahrens.

Aufgrund knapper werdender fossiler Energieressourcen wird eine Nutzung erneuerbarer Energien zunehmend an Bedeutung gewinnen. Teilweise führt auch eine staatliche Förderung solcher Energieformen zu dem Bestreben, vorhandene Technologien auf dem Gebiet der erneuerbaren Energien einzusetzen. So wurde beispielsweise bei Betreibern von Vergärungsanlagen zur Biogaserzeugung ein anhaltendes Interesse an der Verwendung von industriellen Rest- und Abfallschlämmen, welche mit organischen Verbindungen belastet sind, und von nachwachsenden Rohstoffen als Gärsubstrate geweckt.

Derartige Stoffströme sind entweder schon von ihrem Ursprung her mit hohen Konzentrationen gelöster organischer Verbindungen aber wenig suspendierten Feststoffen belastet, oder werden im Rahmen des anaeroben mikrobiellen Metabolismus in der partikulären Organikmasse so stark reduziert, dass die sonst in der Abfallvergärung prozessbestimmenden stofflichen Schlammeigenschaften nicht mehr relevant für die technologische Gestaltung sind.

Eine Entkopplung von hydraulischer Verweilzeit und Feststoffverweilzeit findet bei diesen Substanzen im konventionellen volldurchmischten Bioreaktor nicht mehr statt. Damit sind die Verweilzeit und infolge dessen das Reaktionsvolumen so auszulegen, dass die von der bakteriellen Wachstumsrate bestimmte Auswaschzeit für den Bioreaktor sicher überschritten wird. Eine Rückhaltung und damit Aufkonzentrierung der Biomasse als Voraussetzung für die Verweilzeitverkürzung erfordert deshalb besondere Maßnahmen.

Aus der anaeroben Behandlung feststofffreier Abwässer bekannte Lösungen zur Bakterienimmobilisierung in Festbett- oder Schwebebettreaktoren bzw.

Schlammbettreaktoren (UASB) sind für die vorgenannten Anwendungen nicht störungsfrei einsetzbar. Sowohl die meist in Form von Fasern oder Spelzen vorliegenden geringen Feststoffanteile als auch während der Vergärung weitgehend abgebaute Organikpartikel können in den Immobilisierungsreaktoren zur Akkumulation führen und eine Destrukturierung der Trägerbetten verursachen. Eine Schlammrückführung über ein externes Abscheidesystem unter anaeroben Bedingungen ist sehr aufwendig und wird deshalb in der Regel nicht eingesetzt.

In "Abwassertechnik" (S. 582 bis 589, Wolfgang Bischof, ISBN 3-519-15247-9, Teubner, Stuttgart) wird ein Bioreaktor beschrieben, der ein zentrales inneres Rohr aufweist, an dessen oberem Ende ein Schraubenrad Flüssigkeit aus dem Bereich des Reaktorbodens nach oben saugt und dort zur Schwimmdeckenzerstörung zentrifugal herausschleudert. Der Reaktor weist darüber hinaus eine dem kegelförmigen Reaktorboden angepaßte, ungefähr vom tiefsten Punkt des Reaktors ausgehende Leitung zur Faulschlammentnahme auf, die entlang der Reaktorwand in einen Beobachtungstopf außerhalb der Reaktorhülle ungefähr auf Höhe des Flüssigkeitspegels führt. In dieser Leitung findet keine Auftrennung von Feststoff und flüssiger Phase statt.

Der vorliegenden Erfindung liegt die Aufgabe zugrunde, ein Verfahren der eingangs genannten Art sowie eine Vorrichtung zur Durchführung des Verfahrens derart auszugestalten, dass ein störungsfreier Betrieb des Bioreaktors auch bei den beschriebenen Stoffströmen ermöglicht wird.

Diese Aufgabe wird erfindungsgemäß verfahrensseitig dadurch gelöst, dass die behandelte Suspension einer Zone des Bioreaktors entnommen wird, in der eine Feststoffkonzentration vorliegt, die geringer ist als die mittlere Feststoffkonzentration im Bioreaktor, und die entnommene Suspension über einen gegen die Horizontale geneigten Ablauf aus dem Bioreaktor derart herausgeführt wird, dass in der abgeführten Suspension eine Trennung von Gas und Feststoffen bewirkt wird und zumindest ein Teil der Feststoffe entgegen der Hauptsuspensionsströmung im Ablauf in den Bioreaktor rückgeführt wird.

Es werden also im Ablaufbereich des Bioreaktors solche Bedingungen geschaffen, dass aus einer Zone des Bioreaktors mit geringerer Feststoffkonzentration behandelte Suspension entnommen wird und im Ablauf Flotationseffekte vermieden werden sowie eine Rückführung sedimentierfähiger Feststoffflocken in den Bioreaktor ermöglicht wird. Dadurch kann die Konzentration anaerober Biomasse in dem volldurchmischten Bioreaktor erhöht werden. Dies ist insbesondere beim Einsatz von Gärreaktoren zur Behandlung von nachwachsenden Rohstoffen und industriellen Rest- und Abfallschlämmen vorteilhaft. Bei diesem Einsatzfall enthalten nämlich die zugeführten Organikschlämmen und angemaischten nachwachsenden Rohstoffe reine gelöste oder suspendierte organische Verbindungen mit einem Organikanteil an der Trockensubstanz von ca. 80 bis 98 % und einem nichtorganischen Inertanteil ' vorwiegend in Form gelöster Salze. Aufgrund des hohen Abbaugrades an organischer Substanz zwischen 60 und 90 % ist der verbleibende Restfeststoffgehalt, insbesondere auch in Form suspendierter Partikel, im Bioreaktor sehr gering.

Gemäß einer besonders bevorzugten Ausgestaltung der Erfindung wird zur Umwälzung der Suspension im zentralen Bereich des Bioreaktors eine vertikale Strömung und im Randbereich des Bioreaktors eine der Strömung im zentralen Bereich entgegengesetzt gerichtete vertikale Strömung mit geringerer Strömungsgeschwindigkeit erzeugt und die behandelte Suspension vom unteren Randbereich des Bioreaktors entnommen. Hierzu kann beispielsweise ein zentrales Leitrohr mit Gaseinpressung im Bioreaktor vorgesehen sein. Diese bevorzugte Ausgestaltung beruht auf der Erkenntnis, dass sich bei einem Bioreaktor mit einem Medium geringer partikulärer Feststoffkonzentration und vergleichsweise hoher Biogasproduktion ein Konzentrationsgradient der suspendierten Feststoffe über die Höhe einstellt. In Folge der z.B. ein- bis dreifachen Pumpung des Bioreaktorinhaltes durch das zentrale Leitrohr zur Flüssigkeitsoberfläche werden nämlich in Bodennähe befindliche, schwimmfähige Feststoffe generell nach oben gefördert. Andererseits erfolgt der vertikale Abstrom im Ringraum zwischen Leitrohr und Behälterwand mit wesentlich kleinerer Geschwindigkeit. Bevorzugt weist die Strömung im Randbereich eine Strömungsgeschwindigkeit von weniger als 2,5 cm/sec., besonders bevorzugt ca. 0,5 bis 1, 5 cm/sec., auf. Die im gesamten Reaktionsraum aufsteigenden Biogasblasen bewirken einen zusätzlichen Auftriebs- und Flotationseffekt. Damit werden weniger suspendierte Feststoffe, insbesondere Bakterienbiomasseflocken, nach unten transportiert, als im Leitrohr aufwärts gefördert werden. Entsprechend stellt sich im oberen Bereich der im Bioreaktor befindlichen Suspension eine höhere Feststoffkonzentration ein als in Bodennähe. Dieser Effekt ist über die Gaseinpressung in das zentrale Leitrohr und den daraus resultierenden Pumpeffekt in Grenzen regelbar. Zur Nutzung des beschriebenen Effektes wird bei dieser bevorzugten Ausgestaltung die behandelte Suspension aus dem Bodenbereich des Bioreaktors abgezogen. Um im Ablauf einen weiteren Biomasserückhalt zu gewährleisten, sollten Flotationseffekte durch ebenfalls aufsteigende Biogasblasen im Ablauf reduziert und die Bildung einer stabilen Flockenstrukur unterstützt werden. Dies wird vorzugsweise dadurch erreicht, dass die entnommene Suspension mit einer Strömungsgeschwindigkeit von ca. 0,5 bis ca. 2,5 cm/sec. über den gegen die Vertikale geneigten Ablauf aus dem Bioreaktor herausgeführt wird.

Zur Durchführung des Verfahrens ist ein Bioreaktor mit einem vertikal ausgerichteten Reaktorbehälter zur biologischen Behandlung einer Suspension vorgesehen. Im Innenraum des Reaktorbehälters ist eine vertikal ausgerichtete Leiteinrichtung zur Umwälzung der Suspension im Bioreaktor angeordnet.

Vorrichtungsseitig wird die gestellte Aufgabe dadurch gelöst, dass ein gegen die Vertikale geneigtes Ablaufrohr vorgesehen ist, welches innerhalb des Reaktorbehälters in Bodennähe des Reaktorbehälters beginnt und außerhalb des Reaktorbehälters im oberen Bereich des Reaktorbehälters endet.

Zweckmäßigerweise ist die Leiteinrichtung als Leitrohr ausgebildet, wobei Leitrohrdurchmesser und Reaktorbehälterdurchmesser in einem Verhältnis von 0,1 bis 0,15 stehen. Auf diese Weise wird erreicht, dass die vertikale Strömungsgeschwindigkeit im Ringraum zwischen Leitrohr und Behälterwand wesentlich geringer ist als die Strömungsgeschwindigkeit im Leitrohr.

Zur Realisierung des Ablaufrohres wird das an sich bekannte Prinzip eines Schräglamellenklärers an die Aufgabenstellung im anaeroben Prozess adaptiert. Das Ablaufrohr weist bevorzugt einen Durchmesser von ca. 300 mm bis ca. 1.000 mm auf. Dadurch ergeben sich Strömungsgeschwindigkeiten im Ablaufrohr von 0,5 cm/sec. bis 2,5 cm/sec. Mit Vorteil wird das Ablaufrohr, bevorzugt in Bodennähe neben dem unteren Leitrohreinlauf beginnend, mit einem Neigungswinkel gegen die Vertikale von 30 Grad bis 45 Grad schräg nach oben und durch die Reaktorbehälterwand geführt, die es unter dem minimalen Flüssigkeitsstand im Reaktorbehälter passiert. Außerhalb des Reaktorbehälters wird das Ablaufrohr zweckmäßigerweise über ein Hosenstück in zwei Rohre aufgeteilt, wobei die Summe der Querschnittsflächen dieser beiden Rohre höchstens so groß ist wie die Querschnittsfläche des Ablaufrohres. Die beiden Rohre münden schließlich in eine außen am Reaktorbehälter angeordnete Ablaufkammer. Dabei münden die Rohre vorzugsweise von unten in die Ablaufkammer, wobei das eine Rohr absperrbarer ist und bündig mit dem Boden der Ablaufkammer endet und den minimalen Flüssigkeitsfüllstand im Reaktorbehälter definiert, während das andere Rohr mit einer Überhöhung zum Auslauf des ersten Rohres in die Ablaufkammer ragt und den maximalen Flüssigkeitsfüllstand im Reaktorbehälter definiert.

Aus dem Boden der Ablaufkammer führt zweckmäßigerweise ein Auslaufrohr zum Abzug von behandelter Suspension und gegebenenfalls Überleitung zu einer nachfolgenden Prozessstufe. Beispielsweise kann das Auslaufrohr in einem Ablaufpufferbehälter getaucht münden. Andererseits ist vorzugsweise am Deckel der Ablaufkammer eine Abgasleitung angebracht, die an ein Gasnetz oder eine Abluftbehandlung angeschlossen sein kann.

Gemäß einer Weiterbildung des Erfindungsgedankens ist im Bereich der Ablaufkammer, also zwischen minimaler und maximaler Füllhöhe des Bioreaktors, ein abschließbarer Durchgang in der Reaktorbehälterwand vom Reaktorbehälterinnenraum zur Ablaufkammer angeordnet. Dabei ist der Durchgang vorteilhafterweise im Reaktorbehälterinnenraum mit einem Strömungsleitblech versehen, welches in einem Winkel von ca. 5 Grad bis ca. 10 Grad zur radialen Richtung ausgestellt ist. In Höhe des Durchgangs ist bevorzugt mindestens eine Düse zum Einbringen eines Flüssigkeitsfreistrahls in den Reaktorbehälter angeordnet. Beispielsweise kann ein Düsensystem im Reaktorgasraum knapp über der Flüssigkeitsoberfläche installiert sein, um aus dem Leitrohr radial nach außen geschwemmtes Flotat durch die wirkenden Impulskräfte der Flüssigkeitsfreistrahlen zu entgasen und wieder in die Flüssigkeit einzumischen. Durch Dosierung eines Entschäumermittels kann dieser Effekt noch unterstützt werden. Mit Hilfe des beschriebenen Düsensystems können nicht beherrschbare Schwimmschichtbestandteile aus dem Bioreaktor entnommen werden. Eine Schwimmdeckenbildung kann beispielsweise durch Spelzen, Fasern und ähnliches aus gehäkselten oder gemahlenen vegetabilischen Rohstoffen erfolgen, die durch den bakteriellen Metabolismus nicht oder nur unbedeutend angegriffen werden. Zur Entnahme solcher Schwimmschichtbestandteile wird der Füllstand des Bioreaktors durch Schließen des unteren Ablaufrohres in den Ablaufkasten bis zum oberen Überlauf aufgestaut. Aufgrund des horizontalen Impulsanteils der Flüssigkeitsfreistrahlen wird eine Rotationsströmung längs der Reaktorbehälterwand induziert. Das auf diese Weise in Bewegung versetzte Flotat staut sich an dem jetzt gefluteten Strömungsleitblech. Nach Öffnen der Absperrung zwischen Bioreaktor und Ablaufkammer kann das Flotat über den Durchgang aus dem Bioreaktor abgezogen werden.

Mit der Erfindung wird auch bei einem volldurchmischten Bioreaktor in überraschender Weise eine Biomasseanreicherung im Reaktionsbehälter ermöglicht. Damit wird auch eine Absenkung der hydraulischen Verweilzeit unter die theoretische Bakterienauswaschzeit erreicht. Insgesamt wird mit der Erfindung erst ein störungsfreier Betrieb von Bioreaktoren beim Einsatz von nachwachsenden Rohstoffen ermöglicht.

Im Folgenden soll die Erfindung anhand eines in den Figuren schematisch dargestellten Ausführungsbeispiels näher erläutert werden.

Es zeigen
Figur 1 einen Bioreaktor mit zentralem Leitrohr und schrägem Ablaufrohr im Querschnitt;
Figur 2 den in Figur 1 dargestellten Bioreaktor in der Draufsicht.

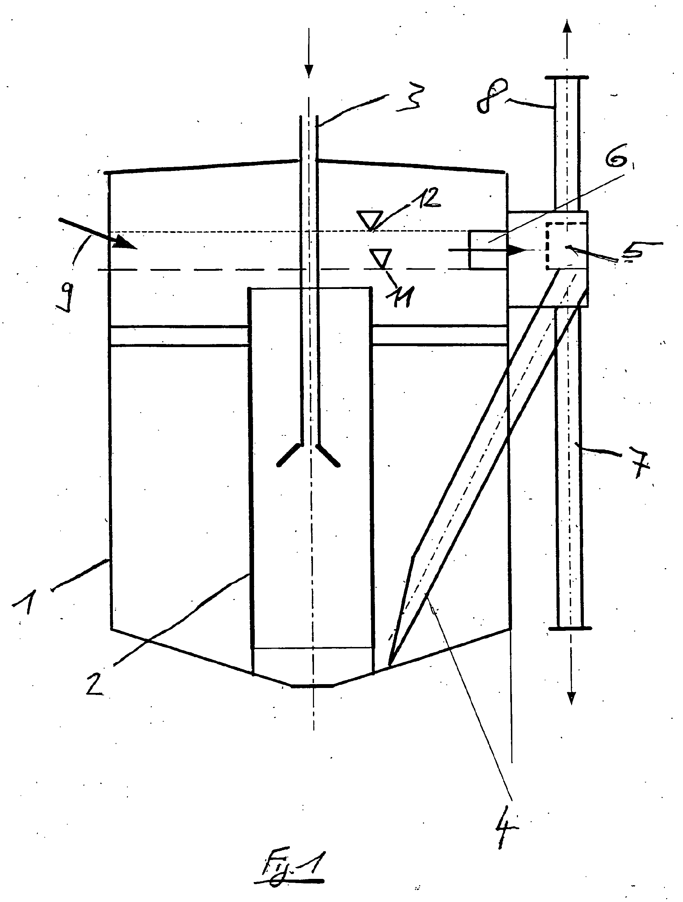

Der in Figur 1 gezeigte Bioreaktor zur anaeroben Behandlung von Suspensionen weist einen Reaktorbehälter 1 auf, in dem ein zentrales Leitrohr 2 angeordnet ist. Über eine Gaszufuhrleitung 3 kann in das zentrale Leitrohr 2 ein Gas, z. B. ein sauerstoffhaltiges Gas zur Unterdrückung von Schwefelwasserstoffbildung im Bioreaktor, in das Leitrohr 2 eingepresst werden. Dadurch wird im Reaktorbehälter 1 eine Schlaufenströmung des Reaktorinhalts bewirkt. Der Reaktorinhalt kann beispielsweise aus nachwachsenden Rohstoffen bestehen, die in angemaischtem Zustand eine fließfähige Suspension bilden. Im Reaktorbehälter 1 ist ferner ein gegen die Vertikale geneigtes Ablaufrohr 4 vorgesehen, welches mit einem Neigungswinkel von 30 bis 45 Grad gegen die Vertikale schräg nach oben und durch die Behälterwand geführt ist. Das Ablaufrohr 4 passiert die Behälterwand unterhalb des minimalen Flüssigkeitsstandes 11 im Reaktorbehälter 1. Über ein in der Figur 1 nicht dargestelltes Hosenstück wird das Ablaufrohr 4 in zwei Rohre aufgeteilt, welche von unten in eine außen am Reaktorbehälter 1 angebrachte Ablaufkammer 5 münden. Aus dem Boden der Ablaufkammer 5 führt ein Auslaufrohr 7 zu einer nachfolgenden, in der Figur 1 nicht dargestellten Prozessstufe. Über eine am Deckel der Ablaufkammer 5 angebrachte Abgasleitung 8 wird das System an ein Gasnetz oder eine Abluftbehandlung angeschlossen. Im Bereich zwischen minimalem Flüssigkeitsstand 11 und maximalem Flüssigkeitsstand 12 des Reaktorbehälters 1 befindet sich in der Reaktorbehälterwand ein abschließbarer Durchgang zur Ablaufkammer 5, der im Reaktorbehälterinnenraum mit einem Strömungsleitblech 6 versehen ist, das in einem Winkel von ca. 5 Grad bis ca. 10 Grad zur radialen Richtung ausgestellt ist.

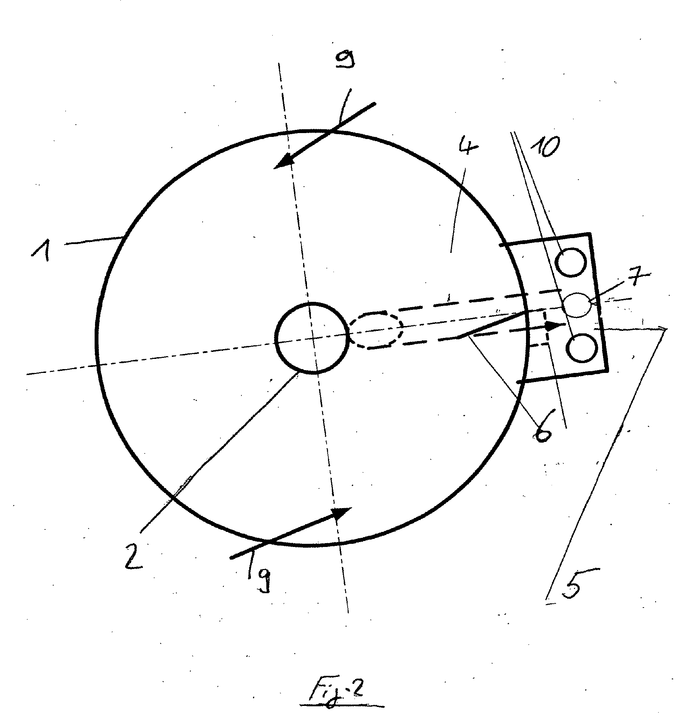

Bei der in Figur 2 gezeigten Draufsicht des Bioreaktors sind dieselben Anlagenteile mit denselben Bezugsziffern versehen wie in Figur 1. In der Draufsicht ist deutlich zu erkennen, dass das Ablaufrohr 4 in zwei Rohre 10 aufgeteilt ist, wobei die beiden Rohre von unten in die Ablaufkammer 5 münden. Das eine, absperrbare Rohr endet mündig mit dem Boden der Ablaufkammer 5 und definiert den minimalen Flüssigkeitsfüllstand im Reaktorbehälter 1. Das zweite, nicht absperrbare Rohr ragt in die Ablaufkammer mit einer Überhöhung zum Auslauf des unteren Rohres, die der maximalen Flüssigkeitsfüllhöhe im Reaktorbehälter entspricht.

### Die Betriebsweise des Bioreaktors ist folgendermaßen:

In dem innerhalb des Reaktorbehälters 1 verlaufenden geneigten Teil des Ablaufrohres 4 steigen Biogasbläschen vertikal auf, sammeln sich an deren inneren Rohroberseite und koaleszieren dort zu größeren Blasen, deren Flotationswirkung auf Feststoffpartikel geringer ist als die von Mikroblasen. Dadurch kommt es zu einer Trennung von Gas und Feststoffen. Letztere können längs der geneigten Rohrinnenfläche sedimentieren und entgegen der Hauptströmung im Ablaufrohr 4 in den Reaktorbehälter 1 rückgeführt werden. Unterstützt wird dies durch die Sogwirkung des Einlaufs des Leitrohres 2 im Bodenbereich, während über die schräg angeschnittene Mündung des Ablaufrohres 4 Flüssigkeit aus dem inneren Reaktorbereich nachströmt. Die Bildung größerer Flocken mit besseren Sedimentationseigenschaften im Ablaufrohr 4 wird unterstützt, indem koagulierende, flockenbildende Chemikalien in das Ablaufrohr 4 dosiert werden. Bei Verwendung von z.B. Eisenchlorid erfolgt gleichzeitig eine sulfidische Fällung, die die Schwefelwasserstoffkonzentration im Biogas reduziert. Im Bereich des maximalen Flüssigkeitsstandes 12 im Reaktorbehälter 1 ist ein Düsensystem 9 angeordnet, über welches Flüssigkeitsfreistrahlen in den Reaktorbehälter 1 eingestrahlt werden können. Durch die Impulskräfte der Flüssigkeitsfreistrahlen wird durch den Flüssigkeitsschwall aus dem Leitrohr am oberen Ende radial nach Außen geschwemmtes Flotat entgast und wieder in die Flüssigkeit eingemischt. Durch Dosierung eines Entschäumers kann dieser Effekt noch unterstütz werden. Auf diese Weise nicht beherrschbare Schwimmschichtbestandteile können aus dem Reaktorbehälter 1 entnommen werden. Hierzu wird der Füllstand des Reaktorbehälters 1 durch Schließen des unteren Ablaufrohres im Ablaufkasten 5 bis zum oberen Überlauf aufgestaut. Durch den horizontalen Impulsanteil der Flüssigkeitsfreistrahlen wird eine Rotationsströmung längs der Reaktorbehälterwand induziert, wodurch das Flotat in Bewegung versetzt wird. Das Flotat staut sich an dem jetzt gefluteten Störmungsleitblech 6. Nach Öffnen eines Wandschiebers zwischen Reaktorbehälter 1 und Ablaufkammer 5 kann das Flotat schließlich über das Auslaufrohr 7 abgezogen werden.

## Patentansprüche

1. Verfahren zur biologischen Behandlung einer Suspension in einem Bioreaktor, wobei zumindest ein Teil der behandelten Suspension aus dem Bioreaktor abgeführt wird,
**dadurch gekennzeichnet, dass** die behandelte Suspension einer Zone des Bioreaktors entnommen wird, in der eine Feststoffkonzentration vorliegt, die geringer ist als die mittlere Feststoffkonzentration im Bioreaktor, und die entnommene Suspension über einen gegen die Vertikale geneigten Ablauf (4) aus dem Bioreaktor derart herausgeführt wird, dass in der abgeführten Suspension eine Trennung von Gas und Feststoffen bewirkt wird und zumindest ein Teil der Feststoffe entgegen der Hauptsuspensionsströmung im Ablauf (4) in den Bioreaktor rückgeführt wird.

2. Verfahren nach Anspruch 1,
**dadurch gekennzeichnet, dass** zur Umwälzung der Suspension im zentralen Bereich des Bioreaktors eine vertikale Strömung und im Randbereich des Bioreaktors eine der Strömung im zentralen Bereich entgegengesetzt gerichtete vertikale Strömung mit geringerer Strömungsgeschwindigkeit erzeugt wird und die behandelte Suspension vom unteren Randbereich des Bioreaktors entnommen wird.

3. Verfahren nach Anspruch 2,
**dadurch gekennzeichnet, dass** die Strömung im Randbereich eine Strömungsgeschwindigkeit von weniger als 2,5 cm/sec., bevorzugt ca. 0,5 bis 1,5 cm/sec., aufweist.

4. Verfahren nach einem der Ansprüche 1 bis 3,
**dadurch gekennzeichnet, dass** die entnommene Suspension mit einer Strömungsgeschwindigkeit von 0,5 bis 2,5 cm/sec. über den Ablauf aus dem Bioreaktor herausgeführt wird.

5. Vorrichtung zur biologischen Behandlung einer Suspension mit einem einen vertikal ausgerichteten Reaktorbehälter (1) aufweisenden Bioreaktor zur Aufnahme der Suspension, wobei im Innenraum des Reaktorbehälters (1) eine vertikal ausgerichtete Leiteinrichtung (2) zur Umwälzung der Suspension angeordnet ist,
**dadurch gekennzeichnet, dass** ein gegen die Vertikale geneigtes Ablaufrohr (4) vorgesehen ist, welches innerhalb des Reaktorbehälters (1) in Bodennähe des Reaktorbehälters (1) beginnt und außerhalb des Reaktorbehälters (1) im oberen Bereich endet,
und dass die Leiteinrichtung (2) als Leitrohr ausgebildet ist, wobei Leitrohrdurchmesser und Reaktorbehälterdurchmesser in einem Verhältnis von 0,1 bis 0,15 stehen,
und dass das Ablaufrohr (4) einen Durchmesser von 300 mm bis 1.000 mm aufweist.

6. Vorrichtung nach Anspruch 5,
**dadurch gekennzeichnet, dass** das Ablaufrohr (4) einen Neigungswinkel gegen die Vertikale von 30 Grad bis 45 Grad aufweist.

7. Vorrichtung nach einem der Ansprüche 5 und 6,
**dadurch gekennzeichnet, dass** das Ablaufrohr (4) außerhalb des Reaktorbehälters (1) in zwei Rohre aufgeteilt ist, wobei die Summe der Querschnittsflächen dieser beiden Rohre höchstens so groß ist wie die Querschnittsfläche des Ablaufrohres (4) und die beiden Rohre in eine außen am Reaktorbehälter (1) angeordnete Ablaufkammer (5) münden.

8. Vorrichtung nach Anspruch 7,
**dadurch gekennzeichnet, dass** die Rohre von unten in die Ablaufkammer (5) münden, wobei das eine Rohr absperrbar ist und bündig mit dem Boden der Ablaufkammer (5) endet und den minimalen Flüssigkeitsfüllstand (11) im Reaktorbehälter (1) definiert, während das andere Rohr mit einer Überhöhung zum Auslauf des einen Rohres in die Ablaufkammer (5) ragt und den maximalen Flüssigkeitsfüllstand (12) im Reaktorbehälter (1) definiert.

9. Vorrichtung nach Anspruch 7 oder 8,
**dadurch gekennzeichnet, dass** aus dem Boden der Ablaufkammer (5) ein Auslaufrohr (7) zum Abzug von behandelter Suspension führt.

10. Vorrichtung nach einem der Ansprüche 7 bis 9,
**dadurch gekennzeichnet, dass** am Deckel der Ablaufkammer (5) eine Abgasleitung (8) angebracht ist.

11. Vorrichtung nach einem der Ansprüche 7 bis 10,
**dadurch gekennzeichnet, dass** im Bereich der Ablaufkammer (5) ein abschließbarer Durchgang in der Reaktorbehälterwand vom Reaktorbehälterinnenraum zur Ablaufkammer (5) angeordnet ist.

12. Vorrichtung nach Anspruch 11, **dadurch gekennzeichnet, dass** der Durchgang im Reaktorbehälterinnenraum mit einem Strömungsleitblech (6) versehen ist, welches in einem Winkel von ca. 5 Grad bis ca. 10 Grad zur radialen Richtung ausgestellt ist.

13. Vorrichtung nach Anspruch 11 oder 12,
**dadurch gekennzeichnet, dass** in Höhe des Durchgangs mindestens eine Düse (9) zum Einbringen eines Flüssigkeitsfreistrahls in den Reaktorbehälter (1) angeordnet ist.

## Claims

1. A method for the biological treatment of a suspension in a bioreactor wherein at least part of the treated suspension is removed from the bioreactor, **characterized in that** the treated suspension is withdrawn from a bioreactor zone in which the solids concentration is lower than the average solids concentration in the bioreactor, and the withdrawn suspension is channelled out of the bioreactor via a vertically inclined outlet (4) in such a way that a separation of gas and solids is effected in the withdrawn suspension and at least part of the solids is fed back into the bioreactor counter to the main suspension flow in the outlet (4).

2. A method according to claim 1, **characterized in that** a vertical flow in the central area of the bioreactor and a vertical flow in the side area of the bioreactor, with a lower flow velocity in opposite direction to the flow in the central area, are created for the purpose of circulating the suspension, and the treated suspension is withdrawn from the lower side area of the bioreactor.

3. A method according to claim 2, **characterized in that** the flow in the side area has a flow velocity below 2.5 cm/sec, preferably approx. 0.5 to 1.5 cm/sec.

4. A method according to one of claims 1 to 3, **characterized in that** the withdrawn suspension is channelled out of the bioreactor via the outlet with a flow velocity of 0.5 to 2.5 cm/sec.

5. An apparatus for the biological treatment of a suspension, comprising a bioreactor with a vertically aligned reactor container (1) for receiving the suspension, wherein a vertically aligned guiding installation (2) is arranged in the interior of the reactor container (1) for the purpose of circulating the suspension, **characterized in that** a vertically inclined outlet pipe (4) is provided which begins inside the reactor container (1) close to the bottom of the reactor container (1) and ends outside the reactor container in the upper area, and **in that** the guiding installation (2) is formed as a guiding pipe, wherein the diameter of the guiding pipe and the diameter of the reactor container have a ratio of 0.1 to 0.15, and **in that** the outlet pipe (4) has a diameter of 300 mm to 1.000 mm.

6. An apparatus according to claim 5, **characterized in that** the outlet pipe (4) has angle of inclination against the vertical of 30 degrees to 45 degrees.

7. An apparatus according to one of claims 5 and 6, **characterized in that** the outlet pipe (4) is divided outside the reactor container (1) into two pipes, wherein the total of the cross-sectional areas of these two pipes is at most as large as the cross-sectional area of the outlet pipe (4) and the two pipes lead into an outlet chamber (5) arranged outside on the reactor container (1)

8. An apparatus according to claim 7, **characterized in that** the pipes lead into the outlet chamber (5) from the bottom, wherein one pipe can be shut off and ends flush with the bottom of the outlet chamber (5) and defines the minimum liquid filling level (11) in the reactor container (1), while the other pipe projects into the outlet chamber with a rise over the mouth of said one pipe and defines the maximum liquid filling level (12) in the reactor container (1).

9. An apparatus according to claim 7 or 8, **characterized in that** a discharge pipe (7) extends from the bottom of the outlet chamber (5) for the purpose of drawing off treated suspension.

10. An apparatus according to one of claims 7 to 9, **characterized in that** a waste gas line (8) is mounted on the lid of the outlet chamber (5).

11. An apparatus according to one of claims 7 to 10, **characterized in that** a closable passage from the interior of the reactor container to the outlet chamber (5) is arranged in the reactor container wall in the area of the outlet chamber (5).

12. An apparatus according to claim 11, **characterized in that** the passage in the interior of the reactor container is equipped with a flow guide plate (6) which is set at an angle of approx. 5 degrees to approx. 10 degrees to the radial direction.

13. An apparatus according to claim 11 or 12, **characterized in that** at least one nozzle (9) for introducing a free liquid jet into the reactor container (1) is arranged at the level of the passage.

## Revendications

1. Méthode de traitement biologique d'une suspension dans un bioréacteur, traitement durant lequel une partie de la suspension à traiter est évacuée du bioréacteur,
**caractérisée en ce que** la suspension à traiter est prélevée dans une zone du bioréacteur dans laquelle se trouve une concentration de matières solides, qui est inférieure à la concentration moyenne en matières solides dans le bioréacteur, et la suspension prélevée est extraite du bioréacteur au moyen d'un écoulement incliné contre la verticale (4) de manière que dans la suspension évacuée il se produise une séparation du gaz et des matières solides et qu'au moins une partie des matières solides soient retournées dans le bioréacteur contrairement au courant principal de la suspension dans l'écoulement (4).

2. Méthode selon la revendication 1, **caractérisée en ce que** pour la recirculation de la suspension se crée un courant vertical dans la zone centrale et dans la zone périphérique du bioréacteur un courant vertical de direction opposée à celle du courant dans la zone centrale avec une vitesse d'écoulement inférieure, et **en ce que** la suspension à traiter soit prélevée dans la zone périphérique inférieure du bioréacteur.

3. Méthode selon la revendication 2, **caractérisée en ce que** le courant dans la zone périphérique présente une vitesse d'écoulement inférieure à 2,5 cm/sec de préférence environ 0,5 à 1,5 cm/sec.

4. Méthode selon une des revendications 1 à 3, **caractérisée en ce que** la suspension prélevée est évacuée avec une vitesse d'écoulement de 0,5 à 2,5 cm/sec via l'écoulement sortant du bioréacteur.

5. Dispositif pour le traitement biologique d'une suspension avec un bioréacteur présentant une cuve de réacteur à orientation verticale (1) pour recevoir la suspension, mais dans l'intérieur de la cuve du réacteur (1) un dispositif de guidage est disposé avec une orientation verticale (2) pour la recirculation de la suspension, **caractérisé en ce que** un tube d'écoulement incliné contre la verticale (4) est prévu, lequel commence à l'intérieur de la cuve du réacteur (1) à proximité du fond de la cuve de réacteur (1) et se termine dans la partie supérieure en dehors de la cuve du réacteur (1), et **en ce que** le dispositif de guidage (2) est formé comme un tube guide, tout en notant que le diamètre du tube guide et le diamètre de la cuve de réacteur soit dans une proportion de 0,1 à 0,15,
et **en ce que** le tube d'écoulement (4) présente un diamètre de 300 mm à 1000 mm.

6. Dispositif selon la revendication 5, **caractérisé en ce que** le tube d'écoulement (4) présente un angle d'inclinaison contre la verticale de 30 à 45 degrés.

7. Dispositif selon l'une des revendications 5 et 6, **caractérisé en ce que** le tube d'écoulement est divisé en deux tubes (4) à l'extérieur de la cuve de réacteur (1), mais la somme des surfaces de section de ces deux tubes est au maximum aussi grande que la surface de la section du tube d'écoulement (4) et les deux tubes débouchent dans une chambre d'écoulement (5) disposée à l'extérieur de la cuve du réacteur (1).

8. Dispositif selon la revendication 7, **caractérisé en ce que** les tubes débouchent du bas dans la chambre d'écoulement (5), tout en notant qu'un tube peut être obturé et se termine à fleur avec le fond de la chambre d'écoulement (5) et définit le niveau minimal de remplissage de liquide (11) dans la cuve du réacteur (1), alors que l'autre tube dépasse d'une surhauteur par rapport à l'écoulement d'un tube dans la chambre d'écoulement (5) et définit le niveau maximum de liquide (12) dans la cuve du réacteur (1).

9. Dispositif selon la revendication 7 ou 8, **caractérisé en ce qu'**à partir du fond de la chambre d'écoulement (5) un tube d'écoulement (7) engendre le tirage de la suspension traitée.

10. Dispositif selon une des revendications 7 à 9, **caractérisé en ce qu'**une conduite de gaz (8) est implantée sur le couvercle de la chambre d'écoulement (5).

11. Dispositif selon une des revendications 7 à 10, **caractérisé en ce que** dans la zone de la chambre d'écoulement (5) un passage obturable est aménagé dans la paroi de la cuve du réacteur de l'espace intérieur du réacteur vers la chambre d'écoulement (5).

12. Dispositif selon la revendication 11, **caractérisé en que** le passage dans l'espace intérieur du réacteur est doté d'une tôle de guidage du courant (6), qui établit un angle d'environ 5 à 10 degrés par rapport à la direction radiale.

13. Dispositif selon la revendication 11 ou 12, **caractérisé en ce qu'**à hauteur du passage au moins une buse (9) est disposée pour apporter un jet libre de liquide dans la cuve du réacteur (1).
